# FASCICULE DE BREVET EUROPEEN

(11) **EP 3 089 952 B1**
(45) Date de publication et mention de la délivrance du brevet: **08.11.2017**
(21) Numéro de dépôt: 14835717.1
(22) Date de dépôt: 18.12.2014
(51) Int. Cl.: C04B 35/48, C04B 35/488, F27D 1/02, F27D 1/00, C04B 35/66, C04B 35/185, C04B 35/14, C04B 35/106, C03B 5/43

(54) **PRODUIT RÉFRACTAIRE AU FLUAGE AMÉLIORÉ**
FEUERFESTES PRODUKT MIT VERBESSERTER KRIECHFESTIGKEIT
REFRACTORY PRODUCT WITH IMPROVED CREEP RESISTANCE

(30) Priorité: 30.12.2013 FR 1363716
(43) Date de publication de la demande: 09.11.2016
(73) Titulaire: Saint-Gobain Centre de Recherches et d'Etudes Européen, 92400 Courbevoie (FR)
(72) Inventeur: CHAMPION, Thibault, F-84660 Maubec (FR); CITTI, Olivier, Wellesley, MA 02482 (US); BOBO, Michel, F-84450 Saint Saturnin Les Avignon (FR)
(74) Mandataire: Nony
(86) Numéro de dépôt international: PCT/IB2014/067060
(87) Numéro de publication internationale: WO 2015/101887

(56) Documents cités:
- EP-A2- 0 134 769
- JP-A- 2006 026 728
- US-A- 4 222 782
- GRIESSER K J ET AL: "Boron incorporation into mullite", MINERALOGY AND PETROLOGY, SPRINGER-VERLAG, VI, vol. 92, no. 3-4, 18 octobre 2007 (2007-10-18), pages 309-320, XP019592681, ISSN: 1438-1168

## Description

### Domaine technique

L'invention se rapporte à un produit non façonné destiné à la fabrication d'un produit réfractaire fritté, en particulier destiné à une voûte de four de verrerie, et à un tel produit réfractaire fritté.

### Etat de la technique

US 4 222 782 décrit un produit non façonné destiné à l'application de revêtements dans des fours ou des containers métallurgiques.

Les produits réfractaires frittés utilisés en voûtes de four de fusion de verre, et en particulier les produits à base de mullite, sont connus pour leur bonne résistance au fluage à hautes températures, en particulier à des températures supérieures à 1400°C.

L'augmentation des dimensions des fours et/ou les conditions d'utilisation plus sévères, et notamment l'augmentation des températures de fusion, nécessitent la mise en oeuvre de produits toujours plus résistants au fluage.

Un but de l'invention est de répondre, au moins partiellement, à ce besoin.

### Résumé de l'invention

L'invention propose un produit non façonné comportant un mélange particulaire constitué par:
- une fraction grossière, représentant plus de 50 % et moins de 91 % du mélange particulaire, en pourcentage massique, et constituée des particules du produit non façonné présentant une taille supérieure ou égale à 50 µm, dites « particules grossières », et
- une fraction matricielle, formant le complément à 100% du mélange particulaire, et constituée des particules du produit non façonné présentant une taille inférieure à 50 µm, dites « particules matricielles»,
le produit non façonné présentant une analyse chimique, en pourcentages massiques sur la base des oxydes du produit non façonné, telle que :
- 45% < Al₂O₃,
- 7,5% < SiO₂ < 35%,
- 0% ≤ ZrO₂ < 33%, pourvu que 10% < SiO₂ + ZrO₂ < 54%,
- 0,15% < B₂O₃ < 8%,
- autres oxydes: < 6%,

Al₂O₃ constituant le complément à 100%, ladite fraction grossière comportant plus de 15% de particules grossières présentant une taille supérieure à 1 mm, en pourcentage massique sur la base du mélange particulaire, ladite fraction matricielle présentant une analyse chimique, en pourcentages massiques sur la base des oxydes de la fraction matricielle, telle que :
- Al₂O₃ + SiO₂ + ZrO₂ > 86%, pourvu que 35% < Al₂O₃.

Comme on le verra plus en détail dans la suite de la description, un produit non façonné selon l'invention permet de fabriquer un produit fritté particulièrement résistant au fluage et parfaitement adapté à une utilisation dans une voûte d'un four de verrerie.

De préférence, un produit non façonné selon l'invention comporte encore une, et de préférence plusieurs, des caractéristiques optionnelles suivantes :
- Dans le produit non façonné, la teneur en « autres oxydes » est de préférence inférieure à 5%, de préférence inférieure à 4%, de préférence inférieure à 3%, de préférence inférieure à 2%, voire inférieure à 1 % ; Dans un mode de réalisation, les «autres oxydes » sont des impuretés ;
- La fraction matricielle, hors (éventuelles) particules comportant du bore, est de préférence constituée, pour plus de 80%, plus de 90%, plus de 95%, voire sensiblement 100% de sa masse, de particules d'alumine et/ou de particules de silice et/ou de particules de mullite et/ou de particules de mullite-zircone et/ou de particules en un matériau silico-alumineux présentant une teneur en alumine supérieure à 50%, de préférence choisi parmi la purusite, la kerphalite, la cyanite, l'andalousite, la sillimanite, une chamotte et leurs mélanges ; De préférence, la fraction matricielle est constituée de particules d'alumine et/ou de particules de silice et/ou de particules de mullite ; De préférence encore, la fraction matricielle est constituée de particules d'alumine et de particules de silice, et/ou de particules de mullite ;
- Si la teneur en silice dans la fraction matricielle est supérieure à 10% en pourcentage massique sur la base des phases oxydes de la fraction matricielle, ladite fraction matricielle présente un rapport massique alumine/silice ou « rapport A/S » supérieur à 2, voire supérieur à 2,5, voire supérieur à 3 et/ou inférieur à 10, de préférence inférieur à 9, de préférence inférieur à 8, de préférence inférieur à 7, de préférence inférieur à 6, de préférence inférieur à 5, voire inférieur à 4 ;
- Le produit non façonné comporte moins de 10%, moins de 5%, moins de 1% de carbure de silicium, de préférence pas de carbure de silicium, en pourcentage massique sur la base du produit non façonné ;
- Le produit fritté comporte moins de 10%, moins de 5%, moins de 1% d'aluminium métallique, en pourcentage massique sur la base du produit non façonné, et de préférence ne comporte pas d'aluminium métallique ;
- Les oxydes représentent plus de 70%, de préférence plus de 80%, de préférence plus de 85%, de préférence plus de 90%, de préférence plus de 95%, de préférence plus de 96%, de préférence plus de 97%, de préférence encore plus de 98% de la masse du produit non façonné ;
- Le produit non façonné comporte de préférence plus de 20%, de préférence plus de 25% de particules grossières présentant une taille supérieure à 1 mm, en pourcentage massique ;
- La fraction grossière est de préférence constituée, pour plus de 80%, plus de 90%, plus de 95%, voire sensiblement 100% de sa masse, de particules d'alumine et/ou de particules de mullite et/ou de particules de mullite-zircone et/ou de particules en un matériau silico-alumineux présentant une teneur en alumine supérieure à 50%, de préférence choisi parmi la purusite, la kerphalite, la cyanite, l'andalousite, la sillimanite, une chamotte et leurs mélanges. De préférence la fraction grossière est constituée, pour plus de 80%, plus de 90%, plus de 95%, voire sensiblement 100% de sa masse, de particules d'alumine et/ou de particules de mullite et/ou de particules de mullite-zircone ;
- Les particules grossières de taille supérieure à 1 mm sont choisies parmi des particules grossières de mullite et/ou des particules grossières de mullite-zircone et/ou des particules grossières d'alumine et/ou des particules grossières d'un matériau silico-alumineux présentant une teneur en alumine supérieure à 50%, de préférence choisi parmi la purusite, la kerphalite, la cyanite, l'andalousite, la sillimanite, une chamotte et leurs mélanges ;
- De préférence, la fraction grossière est constituée de particules de mullite ;
- De préférence, plus de 80%, de préférence plus de 90% en masse des particules grossières présentent une taille supérieure à 200 µm, de préférence supérieure à 300 µm, de préférence supérieure à 400 µm, voire supérieure à 0,5 mm et/ou inférieure à 25 mm, de préférence inférieure ou égale à 15 mm, de préférence inférieure ou égale à 10 mm, voire inférieure ou égale à 5 mm ;
- La quantité de bore, exprimée sous la forme B₂O₃, est supérieure à 0,2%, de préférence supérieure à 0,25%, de préférence supérieure à 0,5%, de préférence supérieure à 0,75%, voire supérieure à 0,9% et/ou inférieure à 6,5%, de préférence inférieure à 5,8%, de préférence inférieure à 5,5%, de préférence inférieure à 5,2%, de préférence inférieure à 4,8%, de préférence inférieure à 4,5%, de préférence inférieure à 4,2%, de préférence inférieure à 3,9%, de préférence inférieure à 3,5%, de préférence inférieure à 3,2%, de préférence inférieure à 2,9%, de préférence inférieure à 2,6% ;
- Le bore est apporté par un composé au bore choisi parmi le carbure de bore, les oxydes de bore, l'acide borique, la collemanite, le borate de sodium, les composés comportant de la silice et de l'oxyde de bore comme la danburite ou l'ulérite, SiB₆, les borates d'alumine, AlB₃ et leurs mélanges. De préférence, le composé au bore est choisi parmi le carbure de bore, l'oxyde de bore, H₃BO₃ et leurs mélanges. De préférence, le composé au bore est le carbure de bore ;
- De préférence, plus de 50%, de préférence plus de 60%, de préférence plus de 70%, de préférence plus de 80%, voire plus de 90%, voire sensiblement 100% des particules comportant du bore sont des particules matricielles, en pourcentage massique sur la base des oxydes ;
- La teneur en Al₂O₃ de la fraction matricielle, en pourcentages massiques sur la base des oxydes de la fraction matricielle, est inférieure à 90% ;
- Le produit non façonné comporte un additif de mise en forme et/ou un solvant, de préférence de l'eau.

Un procédé de fabrication d'une pièce frittée peut comporter les étapes suivantes :
A) préparation d'une charge de départ à partir d'un produit non façonné selon l'invention ;
B) mise en forme de ladite charge de départ de manière à former une préforme ;
C) frittage de ladite préforme.

La température de frittage est de préférence supérieure ou égale à 1300°C, de préférence supérieure ou égale à 1350°C, de préférence supérieure à 1400°C, de préférence supérieure à 1500°C et/ou inférieure ou égale à 1850°C, de préférence inférieure à 1800°C, de préférence encore inférieure ou égale à 1750°C.

L'invention concerne également une charge de départ obtenue à l'issue de l'étape A), qui est un cas particulier d'un produit non façonné selon l'invention.

L'invention concerne aussi un produit fritté obtenu à partir d'un produit non façonné selon l'invention, en particulier suivant un procédé comportant les étapes A) à C) ci-dessus.

L'invention concerne ainsi un produit fritté présentant une microstructure constituée de grains liés par une matrice, et présentant une analyse chimique telle, que, en pourcentages massiques sur la base des oxydes et pour un total de 100% :
- 45% < Al₂O₃,
- 7,5% < SiO₂ < 37%,
- 0% ≤ ZrO₂ < 35%, pourvu que 10% < SiO₂ + ZrO₂ < 54,3%,
- 0,1% < B₂O₃ < 2,5%,
- autres oxydes : < 6,4%,

Al₂O₃ constituant le complément à 100%,
le bore étant réparti dans la masse du produit fritté, de préférence dans la matrice, de préférence de manière sensiblement homogène, et
plus de 15% de grains présentant un diamètre équivalent supérieur à 1 mm.

De préférence, un produit fritté selon l'invention comporte encore une, et de préférence plusieurs, des caractéristiques optionnelles suivantes :
- Le produit fritté présente la forme d'un bloc dont toutes les dimensions sont supérieures à 1 mm, supérieures à 5 mm, supérieures à 5 cm et dont toutes les dimensions sont de préférence inférieures à 150 cm, voire inférieures à 100 cm, voire inférieures à 60 cm ;
- Le produit fritté présente une masse supérieure à 1 kg, supérieure à 5 kg, voire supérieure à 10 kg ;
- Le produit fritté présente de préférence une masse volumique apparente supérieure à 2,3 g/cm³, de préférence supérieure à 2,5 g/cm³, et/ou inférieure à 3,5 g/cm³, de préférence inférieure à 3,2 g/cm³ ;
- La quantité de bore, exprimée sous la forme B₂O₃, est supérieure à 0,15%, de préférence supérieure à 0,2%, de préférence supérieure à 0,25%, de préférence supérieure à 0,3%, de préférence supérieure à 0,4%, de préférence supérieure à 0,5% et/ou inférieure à 2%, de préférence inférieure à 1,5%, de préférence inférieure à 1%, de préférence inférieure à 0,8% ;
- La teneur en « autres oxydes » est de préférence inférieure à 6%, de préférence inférieure à 5%, de préférence inférieure à 4%, de préférence inférieure à 3%, de préférence inférieure à 2%, voire inférieure à 1%. Dans un mode de réalisation, les « autres oxydes » sont des impuretés ;
- Le produit fritté, comporte de préférence plus de 17%, de préférence plus de 23%, de préférence plus de 28% de grains présentant un diamètre équivalent supérieur à 1 mm;
- Le granulat est de préférence constitué pour plus de 80%, plus de 90%, plus de 95%, voire sensiblement 100% en nombre, de grains d'alumine et/ou de grains de mullite et/ou de grains de mullite-zircone ;
- Les grains de diamètre équivalent supérieur à 1 mm sont choisis parmi des grains de mullite et/ou des grains de mullite-zircone et/ou des grains d'alumine ;
- De préférence, le granulat est constitué de grains de mullite.

L'invention concerne enfin un four, en particulier un four de verrerie, et en particulier une zone de fusion du verre ou une zone d'affinage du verre ou un canal d'alimentation de verre en fusion, « feeder » en anglais, comportant un produit fritté selon l'invention, en particulier dans une région qui n'est pas en contact avec un matériau en fusion, et notamment qui n'est pas en contact avec du verre en fusion, de préférence dans une superstructure (comportant une voûte et des murs soutenant ladite voûte), de préférence encore dans une voûte.

Un produit non façonné, respectivement un produit fritté, selon l'invention peut encore comporter une ou plusieurs (si elles sont techniquement compatibles) des caractéristiques optionnelles suivantes :
- De préférence, plus de 50%, de préférence plus de 60%, de préférence plus de 70%, de préférence plus de 80%, voire plus de 90%, voire sensiblement 100% du bore est dans des particules matricielles, respectivement dans la matrice ;
- SiO₂ + ZrO₂ > 15%, de préférence SiO₂ + ZrO₂ > 16%, de préférence SiO₂ + ZrO₂ > 20% et/ou SiO₂ + ZrO₂ < 50%, de préférence SiO₂ + ZrO₂ < 46%, de préférence SiO₂ + ZrO₂ < 40% ;
- SiO₂ > 10%, de préférence SiO₂ > 13% et/ou SiO₂ < 30%, de préférence SiO₂ < 27% ;
- Dans un mode de réalisation, ZrO₂ < 4%, de préférence ZrO₂ < 3%, de préférence ZrO₂ < 2%, de préférence ZrO₂ < 1%, de préférence ZrO₂ < 0,5%, voire ZrO₂ < 0,2%, voire la teneur en ZrO₂ est sensiblement nulle ;
- Dans un mode de réalisation, ZrO₂ > 8,5%, de préférence ZrO₂ > 15,5%, voire ZrO₂ > 22,8% et/ou ZrO₂ < 33% ;
- Al₂O₃ + SiO₂ + ZrO₂ > 92%, de préférence Al₂O₃ + SiO₂ + ZrO₂ > 94%, de préférence Al₂O₃ + SiO₂ + ZrO₂ > 96%, ou
   Al₂O₃ + SiO₂ > 83%, de préférence Al₂O₃ + SiO₂ > 85%, de préférence Al₂O₃ + SiO₂ > 90%, de préférence Al₂O₃ + SiO₂ > 92%, de préférence Al₂O₃ + SiO₂ > 94%, de préférence Al₂O₃ + SiO₂ > 96% ;
- Le produit non façonné et/ou la fraction matricielle, respectivement le produit fritté et/ou la matrice, présente(nt)
   - une teneur en Al₂O₃ + SiO₂ supérieure à 85%, voire supérieure à 90%, voire supérieure à 92%, voire supérieure à 94%, voire supérieure à 96% ; ou
   - une teneur en Al₂O₃ + SiO₂ + ZrO₂ supérieure à 85%, voire supérieure à 90%, voire supérieure à 92%, voire supérieure à 94%, voire supérieure à 96% ;
- Le produit non façonné et/ou la fraction matricielle, respectivement le produit fritté et/ou la matrice, présente(nt) une teneur en Al₂O₃ + SiO₂ + ZrO₂ + B₂O₃ supérieure à 94,5%, de préférence supérieure à 95%, de préférence supérieure à 98%, voire supérieure à 99%.
- La teneur en Al₂O₃ dans le produit non façonné et/ou la fraction matricielle, respectivement le produit fritté et/ou la matrice, est de préférence supérieure à 45%, voire supérieure à 50%, voire supérieure à 55%, voire supérieure à 60% et/ou de préférence inférieure à 89%, de préférence inférieure à 85%, de préférence inférieure à 80% ;
- Dans un mode de réalisation, la teneur en ZrO₂ dans le produit non façonné et/ou la fraction matricielle, respectivement le produit fritté et/ou la matrice, est de préférence inférieure à 4%, de préférence inférieure à 3%, de préférence inférieure à 2%, de préférence inférieure à 1%, de préférence inférieure à 0,5%, voire inférieure à 0,2%, voire est sensiblement nulle ;
- La fraction matricielle, respectivement la matrice, représente plus de 15%, de préférence plus de 20%, voire plus de 25% et/ou moins de 40%, voire moins de 35%, voire moins de 30% de la masse du mélange particulaire du produit non façonné, respectivement du produit fritté ;
- Les oxydes représentent plus de 90%, de préférence plus de 95%, voire sensiblement 100% de la masse du produit non façonné et/ou de la fraction matricielle et/ou de la fraction grossière, respectivement du produit fritté et/ou de la matrice et/ou du granulat ;
- Les particules grossières, respectivement les grains, et/ou les particules matricielles sont fritté(e)s ou fondu(e)s, de préférence fondu(e)s.

Dans un premier mode de réalisation particulier préféré, dans le produit non façonné ou le produit fritté :
- la teneur en Al₂O₃ + SiO₂ est de préférence supérieure à 83%, de préférence supérieure à 85%, de préférence supérieure à 90%, de préférence supérieure à 92%, de préférence supérieure à 94%, de préférence à 96% et/ou
- la teneur en ZrO₂ est de préférence inférieure à 4%, de préférence inférieure à 3%, de préférence inférieure à 2%, de préférence inférieure à 1%, de préférence inférieure à 0,5% et/ou
- la teneur en SiO₂ est de préférence supérieure à 10%, supérieure à 15%, voire supérieure à 20% et/ou inférieure à 30%, de préférence inférieure à 27%.

De préférence le produit non façonné présente :
- une analyse chimique telle que, en pourcentages massiques sur la base des oxydes :
   - Al₂O₃ : complément à 100%, et
   - SiO₂ : 21% - 25%, et
   - ZrO₂ < 1%, de préférence ZrO₂ < 0,5%, et
   - 0,2% < B₂O₃ < 5,2% de préférence B₂O₃ < 4,5%, de préférence B₂O₃ < 3,5%, de préférence B₂O₃ < 2,9%, de préférence B₂O₃ < 2,6%, et
   - autres oxydes : < 3%, de préférence < 2%, de préférence < 1%, et
- une quantité de particules matricielles comprise entre 20% et 35% de la masse du mélange particulaire du produit non façonné, et une fraction matricielle présentant une analyse chimique telle que Al₂O₃ + SiO₂ + ZrO₂ + B₂O₃ > 90%, de préférence Al₂O₃ + SiO₂ + B₂O₃ > 90% en pourcentages massiques sur la base des oxydes de la fraction matricielle, et
- plus de 15%, de préférence plus de 20%, de préférence plus de 25% de particules grossières présentant une taille supérieure à 1 mm.

De préférence, le produit non façonné présente une fraction matricielle comportant une quantité de silice comprise entre 10% et 30%, en pourcentages massiques sur la base des oxydes de la fraction matricielle et un rapport alumine / silice compris entre 2 et 5.

De préférence, la mullite représente plus de 50%, de préférence plus de 60%, de préférence plus de 70%, de préférence plus de 75% de la masse des phases cristallisées du produit non façonné et, de préférence encore, Al₂O₃ ≥ 71% et/ou Al₂O₃ ≤ 79%.

De préférence, le produit fritté présente :
- une analyse chimique telle que, en pourcentages massiques sur la base des oxydes :
   - Al₂O₃ : complément à 100%, et
   - SiO₂: 21% - 25%, et
   - ZrO₂ < 1%, de préférence ZrO₂ < 0,5%, et
   - B₂O₃ > 0,2%, de préférence B₂O₃ > 0,25%, de préférence B₂O₃ > 0,3%, de préférence B₂O₃ > 0,4%, de préférence B₂O₃ > 0,5% et B₂O₃ < 1,5%, de préférence B₂O₃ < 1%, de préférence B₂O₃ < 0,8%, et
   - Autres oxydes : < 3%, de préférence < 2%, de préférence < 1%, et
- plus de 15%, de préférence plus de 17%, de préférence plus de 23%, de préférence plus de 28% de grains présentant un diamètre équivalent supérieur à 1 mm.

De préférence, la matrice du produit fritté présente une analyse chimique telle que Al₂O₃ + SiO₂ + B₂O₃ > 90%, en pourcentage massique sur la base des oxydes de la matrice du produit fritté.

De préférence, la mullite représente plus de 50%, de préférence plus de 60%, de préférence plus de 70%, de préférence plus de 75% de la masse des phases cristallisées du produit fritté et, de préférence encore, Al₂O₃ ≥ 71% et/ou Al₂O₃ ≤ 79%.

Dans un deuxième mode de réalisation particulier préféré, dans le produit non façonné ou le produit fritté,
- la teneur en Al₂O₃ + ZrO₂ + SiO₂ est de préférence supérieure à 87%, de préférence supérieure à 90%, de préférence supérieure à 92%, de préférence supérieure à 94%, de préférence supérieure à 96% et/ou
- la teneur en SiO₂ est de préférence supérieure à 7,5%, supérieure à 10,5%, voire supérieure à 13% et/ou inférieure à 20%, de préférence inférieure à 18% et/ou
- la teneur en ZrO₂ est de préférence supérieure à 8,5%, supérieure à 15,5%, voire supérieure à 22,8% et/ou inférieure à 33%.

De préférence le produit non façonné présente :
- une analyse chimique telle que, en pourcentages massiques sur la base des oxydes,
   - Al₂O₃ : complément à 100%, et
   - SiO₂: 14% - 17%, et
   - ZrO₂ : 26% - 32%, et
   - 0,2%< B₂O₃ < 5,2% de préférence B₂O₃ < 4,5%, de préférence B₂O₃ < 3,5%, de préférence B₂O₃ < 2,9%, de préférence B₂O₃ < 2,6%, et
   - Autres oxydes : < 3%, de préférence < 2%, de préférence < 1%, et
   - une quantité de particules matricielles comprise entre 20% et 35% de la masse du mélange particulaire du produit non façonné, et une fraction matricielle présentant une analyse chimique telle que Al₂O₃ + SiO₂ + ZrO₂ + B₂O₃ > 90%, de préférence Al₂O₃ + SiO₂ + ZrO₂ + B₂O₃ > 94%, et
   - plus de 10%, de préférence plus de 15%, de préférence plus de 20%, de préférence plus de 25% de particules grossières présentent une taille supérieure à 1 mm.

De préférence, le produit non façonné présente une fraction matricielle comportant une quantité de silice comprise entre 10% et 30%, en pourcentages massiques sur la base des oxydes de la fraction matricielle et un rapport alumine / silice compris entre 2 et 5.

De préférence, la mullite représente plus de 30%, de préférence plus de 36%, de préférence plus de 42%, de préférence plus de 45% de la masse des phases cristallisées du produit non façonné et, de préférence encore, Al₂O₃ ≥ 44% et/ou Al₂O₃ ≤ 50%.

De préférence le produit fritté présente :
- une analyse chimique telle que, en pourcentages massiques sur la base des oxydes,
   - Al₂O₃ : complément à 100%, et
   - SiO₂: 14% - 17%, et
   - ZrO₂ : 26% - 32%, et
   - B₂O₃ > 0,2%, de préférence B₂O₃ > 0,25%, de préférence B₂O₃ > 0,3%, de préférence B₂O₃ > 0,4%, de préférence B₂O₃ > 0,5% et B₂O₃ < 1,5%, de préférence B₂O₃ < 1%, de préférence B₂O₃ < 0,8%, et
   - autres oxydes : < 3%, de préférence < 2%, de préférence < 1%, et
- plus de 15%, de préférence plus de 17%, de préférence plus de 23%, de préférence plus de 28% de grains présentant un diamètre équivalent supérieur à 1 mm, en pourcentage surfacique mesuré sur des clichés de surfaces polies.

De préférence, la matrice du produit fritté présente une analyse chimique telle que Al₂O₃ + SiO₂ + ZrO₂ + B₂O₃ > 90%, en pourcentage massique sur la base des oxydes de la matrice du produit fritté.

De préférence, la mullite représente plus de 30%, de préférence plus de 36%, de préférence plus de 42%, de préférence plus de 45% de la masse des phases cristallisées du produit fritté et, de préférence encore, Al₂O₃ ≥ 44% et/ou Al₂O₃ ≤ 50%.

### Définitions

- Un produit non façonné est un produit qui ne présente pas une structure solide, ou "monolithique". Une poudre ou une barbotine sont des exemples de produits non façonnés.
- Une poudre ou un mélange particulaire sont des ensembles secs de particules non liées les unes aux autres. Les pourcentages relatifs à un mélange particulaire ou à une poudre sont donc implicitement sur la base de la matière sèche.
- Une poudre se distingue d'un mélange particulaire en ce que les particules présentent toutes, nécessairement, sensiblement la même composition. Le terme de « poudre » est notamment classiquement utilisé pour désigner les matières premières.
- Par « particule », on entend un objet solide dont la taille est inférieure à 30 mm. On distingue en particulier les particules présentant une taille supérieure ou égale à 50 µm, appelées « particules grossières », et celles présentant une taille inférieure à 50 µm, appelées « particules matricielles". L'ensemble des particules grossières constitue la « fraction grossière ». L'ensemble des particules matricielles constitue la « fraction matricielle ».
- La taille des particules d'une poudre ou d'un ensemble particulaire est évaluée classiquement par une caractérisation de distribution granulométrique réalisée avec un granulomètre laser pour les particules de taille inférieure à 2 mm et par tamisage à l'aide de tamis à mailles carrées d'ouverture supérieure à 2 mm pour les particules de taille supérieure à 2 mm. Le granulomètre laser peut être, par exemple, un Partica LA-950 de la société HORIBA. Les particules grossières conservent sensiblement leurs dimensions et leur morphologie lors du frittage et correspondent donc sensiblement aux grains du produit fritté.
- Le diamètre équivalent d'un grain mesuré sur un cliché de surface polie est le diamètre du cercle présentant la même surface que ledit grain. Le diamètre équivalent peut être évalué à l'aide d'un logiciel de traitement d'image.
- Le pourcentage de grains présentant un diamètre équivalent supérieur à « n » mm, par exemple 1 mm, est le pourcentage de l'aire d'une surface polie d'un produit occupée par des grains de diamètre équivalent supérieur à « n » mm.
- Les percentiles ou « centiles » 10 (A₁₀), 50 (A₅₀), 90 (A₉₀) et 99,5 (A_{99,5}), et plus généralement « n » Aₙ d'une propriété A d'une population, par exemple d'une population de particules sont les valeurs de cette propriété correspondant aux pourcentages de 10%, 50%, 90%, 99,5% et n%, respectivement, sur la courbe de distribution cumulée relative à cette propriété, les valeurs relatives à cette propriété étant classées par ordre croissant. En particulier, les percentiles Dₙ sont relatifs à des tailles de particules d'une poudre ou d'un ensemble particulaire. Les pourcentages sont en masse.
   Par exemple, 10 %, en masse, des particules de la poudre ont une taille inférieure à D₁₀ et 90 % des particules en masse ont une taille supérieure ou égale à D₁₀. Les percentiles relatifs à la taille des particules peuvent être déterminés à l'aide d'une distribution granulométrique réalisée à l'aide d'un granulomètre laser et/ou de tamisages.
   Le percentile 50 est classiquement appelé le percentile « médian ». Par exemple, le
   percentile D₅₀ est conventionnellement appelé « taille médiane ».
- On appelle « frittage » la consolidation par traitement thermique à plus de 1100°C d'une préforme, avec éventuellement une fusion, partielle ou totale, de certains de ses constituants (mais pas de tous ses constituants, de sorte que la préforme n'est pas transformée en une masse liquide).
   De manière générale, le frittage conduit à la transformation de la fraction matricielle en une phase liante, ou "matrice", qui va lier entre elles les particules grossières (sensiblement non affectées par le frittage). Par souci de clarté, on appelle "grains" les particules grossières liées par la matrice. L'ensemble des grains est appelé "granulat".
- Par « impuretés», on entend les constituants inévitables, introduits involontairement et nécessairement avec les matières premières ou résultant de réactions avec ces constituants. Les impuretés ne sont pas des constituants nécessaires, mais seulement tolérés.
- Sauf indication contraire, tous les pourcentages relatifs à des teneurs sont des pourcentages massiques sur la base des oxydes, comme cela est classique dans les produits réfractaires. La teneur massique d'un constituant est classiquement exprimée sous la forme de l'oxyde le plus stable. Classiquement, la teneur en bore et en éléments dont la quantité ne dépasse pas 0,5% est déterminée par « Inductively Coupled Plasma » ou ICP, et pour déterminer la teneur des autres éléments, une perle du produit à analyser est fabriquée en fondant le produit, puis l'analyse chimique est réalisée par fluorescence X. Les appareils classiquement utilisés convertissent automatiquement les teneurs des constituants non oxydes en teneurs oxydes équivalentes. Quelle que soit la méthode de mesure, le carbone et l'hydrogène résiduels ne sont cependant pas dosés.
- Dans un souci de clarté, on utilise les formules chimiques des oxydes pour exclusivement désigner les teneurs de ces oxydes dans une composition. Par exemple « B₂O₃ », « ZrO₂ », « HfO₂ », « SiO₂ » ou « Al₂O₃ » désignent les teneurs de ces oxydes dans la composition et « oxyde de bore », « zircone », « hafnie », « silice » et « alumine » sont exclusivement utilisés pour désigner des phases cristallisées de ces oxydes constituées de B₂O₃, ZrO₂, HfO₂, SiO₂ et Al₂O₃, respectivement. Ces oxydes peuvent cependant être également présents sous d'autres phases, en particulier sous forme de mullite ou de mullite-zircone.
- Par « particule de mullite-zircone », on entend une particule réfractaire obtenue par frittage ou par fusion et dont l'analyse chimique révèle la présence majoritaire d'alumine (Al₂O₃), de silice (SiO₂) et de zircone (ZrO₂) ; la silice et l'alumine étant présentes essentiellement sous la forme 2 SiO₂- 3 Al₂O₃ (mullite).
- Par « contenant un », « comprenant un » ou « comportant un », on entend « comportant au moins un », sauf indication contraire.
- Les différentes caractéristiques d'un produit selon l'invention peuvent être déterminées par les méthodes de caractérisation utilisées pour les exemples ci-dessous.

### Brève description des figures

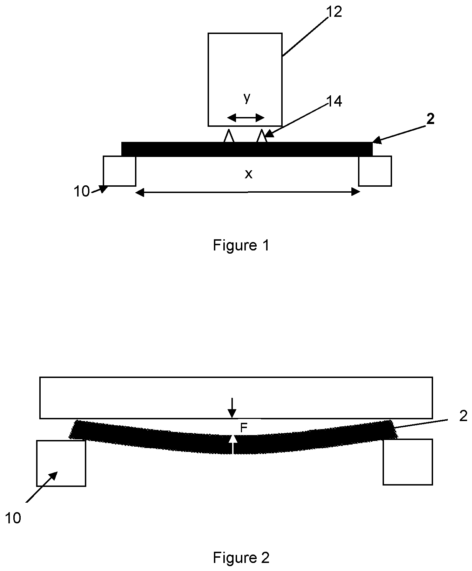

D'autres caractéristiques et avantages de l'invention apparaîtront encore à l'examen du dessin, fourni à titre illustratif et non limitatif, dans lequel la figure 1 représente schématiquement un dispositif utilisable pour mesurer la résistance au fluage, et la figure 2 représente schématiquement la déformation de la barrette après un essai de fluage.

### Description détaillée

Un produit non façonné selon l'invention peut être avantageusement utilisé pour fabriquer un produit fritté présentant un granulat lié par une matrice liante. A cet effet, un procédé comportant les étapes A) à C) décrites ci-dessus peut être mis en oeuvre.

**A l'étape A),** un mélange particulaire est mélangé dans un solvant, classiquement de l'eau. Les sources de matières premières sont déterminées en fonction de la composition et de la distribution granulométrique souhaitées.

Les modèles de compaction d'Andréasen ou de Fuller-Bolomey peuvent être utilisés pour adapter la distribution granulométrique à la densité apparente souhaitée pour les produits frittés. De tels modèles de compaction sont notamment décrits dans l'ouvrage intitulé « Traité de céramiques et matériaux minéraux », C.A. Jouenne, Editions Septima. Paris (1984), pages 403 à 405. En particulier, cette adaptation permet avantageusement de fabriquer un produit réfractaire fritté présentant une masse volumique apparente comprise entre 2,3 g/cm³ et 3,5 g/cm³, de préférence comprise entre 2,5 g/cm³ et 3,2 g/cm³.

Le composé au bore peut être ajouté sous forme solide, par exemple sous la forme d'une poudre, et/ou sous une forme liquide, par exemple dilué dans de l'eau. Le bore peut par exemple être apporté sous la forme d'une poudre de B₄C.

Dans un mode de réalisation avantageux, le bore est apporté sous forme liquide, de préférence lors la préparation de la charge de départ, de préférence au moment de la réalisation du mélange à l'étape A), par exemple par mise en solution et/ou aspersion. Avantageusement, le composé au bore est bien dispersé dans la charge de départ.

De préférence, la charge de départ contient un additif de mise en forme, de préférence introduit sous une forme sèche, et de préférence en une quantité supérieure à 0,1% et inférieure à 7%, de préférence inférieure à 5%, de préférence inférieure à 3%, voire inférieure à 2%, en pourcentage massique sur la base de la masse du mélange particulaire.

L'additif de mise en forme peut en particulier être choisi dans le groupe constitué par :
- les argiles ;
- les plastifiants, comme le polyéthylène glycol (ou « PEG ») ou l'alcool polyvinylique (ou « APV »);
- les ciments, de préférence à haute teneur en alumine ;
- les alumines hydratables, comme la boehmite ;
- les phosphates, de préférence les phosphates d'alumines,
- les silicates de soude et/ou de potassium ;
- les géopolymères ;
- les liants dont les liants temporaires organiques tels que les résines organiques, les lignosulfonates, la carboxyméthylcellulose, la dextrine et les alginates ;
- les défloculants, tels que des polyphosphates de métaux alcalins, des polyacrylates de métaux alcalins, des polycarboxylates ;
- les mélanges de ces produits.

De préférence, l'additif de mise en forme est choisi dans le groupe constitué par les ciments, les défloculants, les argiles, les lignosulfonates, l'APV et leurs mélanges.

Lorsque le bore ou l'additif sont apportés sous forme de particules, ces particules font bien entendu partie du mélange particulaire.

Le produit non façonné peut être livré prêt-à-l'emploi. De préférence, il est sec et contient l'additif de mise en forme. Il suffit alors de le mélanger à un solvant, de préférence de l'eau, pour préparer la charge de départ.

La quantité de solvant est fonction de la technologie utilisée à l'étape B).

Dans le cas d'une mise en forme par pressage à froid, un ajout d'une quantité d'eau comprise entre 1,5% et 4%, en pourcentage massique sur la base du mélange particulaire, est préféré. Dans le cas d'une mise en forme faisant intervenir une liaison hydraulique, par exemple un coulage, un ajout d'une quantité d'eau comprise entre 3% et 7%, en pourcentage massique sur la base du mélange particulaire, est préféré.

**A l'étape B**), la charge de départ peut être versée dans un moule, afin d'être mise en forme et transformée en préforme suivant des techniques conventionnelles, par exemple par pressage.

Après l'étape B) et avant l'étape C), la préforme peut subir une étape de séchage, afin d'éliminer une partie de l'eau ayant été utilisée pour la mise en forme. Une telle étape est parfaitement connue de l'homme du métier.

**A l'étape C),** les conditions de frittage, et en particulier la température de frittage, dépendent de la composition de la préforme. L'homme du métier peut aisément contrôler la qualité du frittage et adapter éventuellement la température en conséquence. Habituellement, une température de frittage comprise entre 1350°C et 1850°C, de préférence comprise entre 1500°C et 1750°C, est bien adaptée. Le frittage peut être effectué *in situ,* c'est-à-dire après que la préforme a été disposée dans sa position de service, en particulier dans une voûte d'un four de verrerie.

A l'issue de l'étape C), on obtient un produit réfractaire fritté selon l'invention, présentant une distribution sensiblement homogène de l'élément bore, de préférence dans la matrice dudit produit réfractaire.

Les propriétés de ce produit fritté le rendent particulièrement bien adapté à une utilisation dans un four de verrerie, en particulier dans une voûte de four de verrerie.

### Exemples

Les exemples suivants sont fournis à des fins illustratives et ne limitent pas l'invention.

La teneur en bore et en éléments dont la quantité ne dépasse pas 0,5% est déterminée par « Inductively Coupled Plasma » ou ICP.

La teneur en autres éléments est déterminée par fluorescence X.
La résistance au fluage est déterminée à l'aide de la méthode suivante : une barrette 2 du produit à tester, de longueur égale à 200 mm, de largeur égale à 25 mm et de hauteur égale à 15 mm, est disposée sur des plots 10 en alumine frittée dense, lesdits plots étant disposés à chacune des extrémités de la barrette de manière à ce que la portée (autrement dit la longueur de la barrette non soutenue entre les plots) soit égale à x = 180 mm. Une brique réfractaire 12 ayant une masse égale à 2670 g est disposée au centre de la barrette sur des plots 14 en alumine frittée dense espacés l'un de l'autre de y = 40 mm, ladite brique présentant une longueur sensiblement égale à 110 mm, une largeur sensiblement égale à 75 mm et une hauteur sensiblement égale à 200 mm (voir figure 1). Le centre de la brique est sensiblement aligné avec le centre de la barrette à tester. Cet ensemble est ensuite placé dans un four électrique et le cycle thermique suivant est appliqué :
Montée de 20°C à 1600°C à 100°C/h
Palier de 50 heures à 1600°C
Descente à 100°C/h.

Après traitement thermique, la déformation F de la barrette est déterminée à l'aide d'une règle, selon la figure 2. Plus la déformation de la barrette est faible, plus la résistance au fluage est élevée.

La méthode utilisée pour déterminer la quantité de grains de diamètre équivalent supérieur à 1 mm dans un produit fritté selon l'invention est la suivante : trois échantillons dudit produit fritté sont prélevés aléatoirement. Chaque échantillon est ensuite enrobé d'une résine, par exemple une résine époxy, puis poli. Chaque polissage est ensuite immergé une minute dans une solution d'acide fluorhydrique à 10% massique à température ambiante de manière à révéler les joints de grains. Chaque polissage est ensuite rincé à l'eau puis séché. Des clichés de la surface polie sont réalisés à l'aide d'un microscope optique, chaque cliché permettant d'observer au moins une surface égale à 8 mm par 5 mm. La surface des clichés réalisés occupée par des grains de diamètre équivalent supérieur à 1 mm peut être évaluée à l'aide d'un logiciel de traitement d'image, comme ImageJ.

La distribution granulométrique des poudres a été déterminée à l'aide d'un granulomètre laser pour les particules de taille inférieure à 2 mm et par tamisage à l'aide de tamis à mailles carrées d'ouverture supérieure à 2 mm pour les particules de taille supérieure à 2 mm.

La masse volumique apparente et la porosité ouverte ont été mesurées suivant la norme IS05017.

Les matières premières suivantes ont été utilisées pour les exemples :
- des poudres de mullite telles que D_{99,5} < 3 mm,
- une poudre de fumée de silice constituée essentiellement de microsphères de silice vitreuse telles que D₉₀ < 4 µm, avec D₅₀ = 0,5 µm. Elle présente une surface spécifique B.E.T. de 14 m²/g, une teneur massique en silice de 93,5%, une teneur en Al₂O₃ de 3,5% et une teneur en ZrO₂ + HfO₂ de 2,4% ;
- une poudre d'alumine présentant une teneur en alumine supérieure à 99,75% et un D₅₀ égal à 5 µm.
- les additifs de mise en forme suivant :
   - une argile à 40% d'alumine
   - un lignosulfonate de calcium
   - un éther de cellulose non ionique soluble dans l'eau.

Le composé au bore utilisé est :
pour les exemples 2 et 5 à 8, une poudre de carbure de bore B₄C présentant un diamètre médian D₅₀ égal à 4,6 µm,
pour l'exemple 3, une poudre d'oxyde de bore B₂O₃, commercialisée par la société Borax, pour l'exemple 4, une poudre d'acide borique H₃BO₃, commercialisé par la société Borax sous le nom Optibor^{®} TG, présentant une teneur en H₃BO₃ supérieure à 99,9%.

Les poudres de silice, d'alumine et de mullite sont mélangées avec 1% d'argile, en pourcentage massique sur la base du mélange particulaire. Puis sont introduits le composé au bore, le lignosulfonate de calcium et l'éther de cellulose dilués dans l'eau nécessaire à la mise en forme. La quantité d'eau est égale à 2,8% et la quantité totale d'additif, argile comprise, est égale à 1,7%, en pourcentages sur la base du mélange particulaire.

Le mélange humide obtenu est alors pressé sous la forme de briques de dimensions 230 x 114 x 64 mm³ sur une presse mécanique simple effet à une pression de 720 kg/cm².

Les briques obtenues sont séchées en étuve pendant 24 heures à 110°C.

Ces briques ont ensuite été frittées à une température de palier de 1700°C, le temps de maintien en palier étant de 5 heures, la vitesse de montée en température étant de 50°C/h. Après le palier de température, la température est diminuée, la vitesse de descente en température étant de 50°C/h jusqu'à 800°C, la descente en température étant ensuite libre jusqu'à la température ambiante.

Le tableau 1 suivant résume les essais et les résultats obtenus, les pourcentages sont des pourcentages massiques sauf indication.

**Tableau 1**

| exemple | 1* | 2 | 3 | 4 | 5 | 6 | 7 | 8 |
|---|---|---|---|---|---|---|---|---|
| **Mélange particulaire** | | | | | | | | |
| nature des particules grossières | mullite | mullite | mullite | mullite | mullite | mullite | mullite | mullite |
| quantité de particules grossières sur la base de la masse du mélange particulaire (%) | 70,3 | 70,3 | 69,9 | 69,4 | 70,1 | 69,9 | 69,4 | 68,5 |
| quantité de particules grossières de taille > 1 mm, sur la base de la masse du mélange particulaire (%) | 39 | 39 | 39 | 39 | 39 | 39 | 39 | 41 |
| nature des particules matricielles | Silice, alumine, mullite, | Silice, alumine, mullite, composé au bore | Silice, alumine, mullite, composé au bore | Silice, alumine, mullite, composé au bore | Silice, alumine, mullite, composé au bore | Silice, alumine, mullite, composé au bore | Silice, alumine, mullite, composé au bore | Silice, alumine, mullite, composé au bore |
| Al₂O₃ (%) | 75,47 | 75,28 | 75,10 | 75,05 | 74,91 | 74,54 | 73,62 | 71,82 |
| SiO₂ (%) | 23,97 | 23,90 | 23,85 | 23,83 | 23,78 | 23,67 | 23,37 | 22,80 |
| ZrO₂ (%) | 0,18 | 0,18 | 0,18 | 0,18 | 0,18 | 0,17 | 0,17 | 0,17 |
| B₂O₃ (%) | - | 0,25 | 0,50 | 0,56 | 0,75 | 1,24 | 2,46 | 4,85 |
| Autres oxydes (%) | 0,38 | 0,39 | 0,37 | 0,38 | 0,38 | 0,38 | 0,38 | 0,36 |
| Al₂O₃+SiO₂+ZrO₂ (%) | 99,62 | 99,36 | 99,13 | 99,06 | 98,87 | 98,38 | 97,16 | 94,79 |
| SiO2+ZrO2 (%) | 24,15 | 24,08 | 24,03 | 24,01 | 23,96 | 23,84 | 23,54 | 22,97 |
| Al₂O₃ en % massique sur la base des oxydes de la fraction matricielle | 76,12 | 75,48 | 74,86 | 74,69 | 74,23 | 73,02 | 70,15 | 65,02 |
| Al₂O₃+SiO₂+ZrO₂ en % massique sur la base des oxydes de la fraction matricielle | 99,43 | 98,59 | 97,78 | 97,55 | 96,95 | 95,37 | 91,62 | 84,93 |
| teneur en silice dans la fraction matricielle, en % massique sur la base des phases oxydes de la fraction matricielle | 22,68 | 22,49 | 22,31 | 22,25 | 22,12 | 21,76 | 20,90 | 19,37 |
| Alumine / Silice dans la fraction matricielle | 3,36 | 3,36 | 3,36 | 3,36 | 3,36 | 3,36 | 3,36 | 3,36 |
| nature du composé au bore | - | B₄C | B₂O₃ | H₃BO₃ | B₄C | B₄C | B₄C | B₄C |
| Quantité de composé au bore (%) | - | 0,1 | 0,5 | 1 | 0,3 | 0,5 | 1 | 2 |

| **Produit fritté** | | | | | | | | |
|---|---|---|---|---|---|---|---|---|
| Al₂O₃ (%) | 75,79 | 75,28 | 75,87 | 75,11 | 75,04 | 74,88 | 74,9 | 74,54 |
| SiO₂ (%) | 23,57 | 23,47 | 23,23 | 24,05 | 23,54 | 23,53 | 23,59 | 23,58 |
| Al₂O₃ + SiO₂ (%) | 99,36 | 98,75 | 99,1 | 99,16 | 98,58 | 98,41 | 98,49 | 98,12 |
| B₂O₃(%) | 0 | 0,13 | 0,24 | 0,19 | 0,26 | 0,65 | 0,71 | 1,41 |
| Autres (%) | 0,64 | 1,12 | 0,66 | 0,65 | 1,16 | 0,94 | 0,8 | 0,47 |
| Grains présentant un diamètre équivalent > 1 mm, en pourcentage surfacique | 36 | 38 | 35 | 37 | 35 | 40 | 37 | 34 |
| masse volumique apparente (g/cm³) | 2,69 | 2,66 | 2,65 | 2,65 | 2,71 | 2,69 | 2,69 | 2,69 |
| porosité ouverte (%) | 13,5 | 14,2 | 14,2 | 13,7 | 11,8 | 12,7 | 12 | 9,9 |
| déformation F après essai de fluage (mm) | 4,68 | 1,67 | 1,84 | 1,27 | 1,02 | 0,22 | 0,61 | 1,57 |

On considère qu'un produit présente une amélioration importante de sa résistance au fluage lorsqu'il présente, avec le test utilisé, une déformation F mesurée après essai inférieure à 4 mm, soit une amélioration d'au moins 15% par rapport au produit de l'exemple 1 hors invention habituellement utilisé en voûte de four de verrerie.

Une comparaison de l'exemple 1 hors invention et des exemples 2 à 8 selon l'invention montre l'efficacité de l'ajout d'un composé au bore sur l'amélioration de la résistance au fluage.

Une comparaison des exemples 2 à 8 selon l'invention montre encore que :
- la résistance au fluage (qui correspond à une déformation F mesurée minimale) est maximale pour des teneurs en bore dans le mélange particulaire telles que 0,75% ≤ B₂O₃ ≤ 2,46%,
- une teneur en bore dans le mélange particulaire égale à 4,85% permet d'améliorer la résistance au fluage du produit fritté, mais dans une moindre mesure.

Le mélange particulaire selon l'exemple 6 est l'exemple préféré.

Le produit fritté obtenu à partir du mélange particulaire de l'exemple 6 est le produit fritté préféré.

Comme cela apparaît clairement à présent, l'invention fournit un produit réfractaire qui présente une excellente résistance au fluage à haute température, ainsi qu'une résistance à la corrosion, une résistance au cyclage thermique et une résistance mécanique qui le rendent parfaitement adapté à l'application visée

Bien entendu, l'invention n'est pas limitée aux modes de réalisation décrits, fournis à titre illustratif et non limitatif.

## Revendications

1. Produit non façonné destiné à la fabrication d'un produit réfractaire fritté, ledit produit non façonné comportant un mélange particulaire constitué par :
- une fraction grossière, représentant plus de 50 % et moins de 91 % du mélange particulaire, en pourcentage massique, et constituée des particules présentant une taille supérieure ou égale à 50 µm, dites « particules grossières », et
- une fraction matricielle, formant le complément à 100% du mélange particulaire, et constituée des particules présentant une taille inférieure à 50 µm, dites « particules matricielles »,
le produit présentant une analyse chimique, en pourcentage massique sur la base des oxydes du produit, telle que :
- 45% < Al₂O₃,
- 7,5% < SiO₂ < 35% et 0% ≤ ZrO₂ < 33%, pourvu que 10% < SiO₂ + ZrO₂ < 54%,
- 0,15% < B₂O₃ < 8%,
- autres oxydes: < 6%,
Al₂O₃ constituant le complément à 100%,
ladite fraction grossière comportant plus de 15% de particules grossières présentant une taille supérieure à 1 mm, en pourcentage massique sur la base du mélange particulaire, ladite fraction matricielle présentant une analyse chimique, en pourcentage massique sur la base des oxydes de la fraction matricielle, telle que :
- Al₂O₃ + SiO₂ + ZrO₂ > 86%, pourvu que 35% < Al₂O₃.

2. Produit non façonné selon la revendication précédente, dans lequel 0,2% < B₂O₃ < 6,5% et/ou la teneur en autres oxydes est inférieure à 5%.

3. Produit non façonné selon la revendication immédiatement précédente, dans lequel 0,75% < B₂O₃ < 4,5% et/ou la teneur en autres oxydes est inférieure à 2%.

4. Produit non façonné selon la revendication immédiatement précédente, dans lequel B₂O₃ < 2,6%.

5. Produit non façonné selon l'une quelconque des revendications précédentes, dans lequel le bore est apporté par un composé au bore choisi parmi le carbure de bore, les oxydes de bore, l'acide borique, la collemanite, le borate de sodium, les composés comportant de la silice et de l'oxyde de bore, SiB₆, les borates d'alumine, AlB₃ et leurs mélanges.

6. Produit non façonné selon l'une quelconque des revendications précédentes, dans lequel la fraction matricielle, hors particules comportant du bore, est constituée, pour plus de 80% de sa masse, de particules d'alumine et/ou de particules de silice et/ou de particules de mullite et/ou de particules de mullite-zircone et/ou de particules en un matériau silico-alumineux présentant une teneur en alumine supérieure à 50%.

7. Produit non façonné selon l'une quelconque des revendications précédentes, dans lequel plus de 50% des particules comportant du bore sont des particules matricielles, en pourcentage massique sur la base des oxydes.

8. Produit non façonné selon l'une quelconque des revendications précédentes, dans lequel Al₂O₃ + SiO₂ > 83% ou Al₂O₃ + SiO₂ + ZrO₂ > 92% ou 15% < SiO₂ + ZrO₂ < 50% ou SiO₂ > 10%.

9. Produit non façonné selon l'une quelconque des revendications précédentes, dans lequel si la teneur en silice dans la fraction matricielle est supérieure à 10%, en pourcentage massique sur la base des phases oxydes de la fraction matricielle, ladite fraction matricielle présente un rapport alumine/silice supérieur à 2 et inférieur à 10.

10. Produit non façonné selon l'une quelconque des revendications précédentes, dans lequel la fraction grossière est constituée, pour plus de 80% de sa masse, de particules d'alumine et/ou de particules de mullite et/ou de particules de mullite-zircone et/ou de particules en un matériau silico-alumineux présentant une teneur en alumine supérieure à 50%.

11. Produit non façonné selon l'une quelconque des revendications précédentes présentant
- une analyse chimique telle que :
- Al₂O₃ : complément à 100%
- (21% ≤ SiO₂ ≤ 25% et ZrO₂ < 1%) ou (14% < SiO₂ < 17% et 26% < ZrO₂ < 32%)
- 0,2% < B₂O₃ < 2,6%,
- autres oxydes : < 3%, et
- une fraction matricielle présentant une analyse chimique telle que Al₂O₃ + SiO₂ + ZrO₂ + B₂O₃ > 90%, et
- une quantité de particules matricielles comprise entre 20% et 35% de la masse du mélange particulaire, et
- plus de 15% de particules grossières présentant une taille supérieure à 1 mm,
les teneurs de l'analyse chimique étant exprimées en pourcentages massiques sur la base des oxydes.

12. Produit fritté réfractaire présentant une microstructure constituée de grains liés par une matrice, et présentant une analyse chimique telle, que, en pourcentages massiques sur la base des oxydes et pour un total de 100% :
- 45% < Al₂O₃,
- 7,5% < SiO₂ < 37% et 0% ≤ ZrO₂ < 35%, pourvu que 10% < SiO₂ + ZrO₂ < 54,3%,
- 0,1%<B₂O₃<₂,5%,
- autres oxydes : < 6,4%,
Al₂O₃ constituant le complément à 100%,
le bore étant réparti dans la masse dudit produit fritté, et
plus de 15% de grains présentant un diamètre équivalent supérieur à 1 mm.

13. Produit fritté selon la revendication précédente, dans lequel 0,25% < B₂O₃ < 1%.

14. Produit fritté selon l'une quelconque des deux revendications immédiatement précédentes, dans lequel 20% < SiO₂ + ZrO₂ < 40%.

15. Produit fritté selon l'une quelconque des trois revendications immédiatement précédentes présentant :
- une analyse chimique telle que :
- Al₂O₃: complément à 100%
- (21% ≤ SiO₂ ≤ 25% et ZrO₂ < 1%), ou (14% < SiO₂ < 17% et 26% < ZrO₂ < 32%)
- 0,25% < B₂O₃ < 1%,
- autres oxydes : < 3%, et
- plus de 15% de de grains présentant un diamètre équivalent supérieur à 1 mm,
les teneurs de l'analyse chimique étant exprimées en pourcentages massiques sur la base des oxydes.

16. Four de verrerie comportant un produit fritté selon l'une quelconque des quatre revendications immédiatement précédentes.

17. Four de verrerie selon la revendication immédiatement précédente, dans lequel ledit produit fritté est dans une région qui n'est pas susceptible d'entrer en contact avec du verre en fusion.

## Patentansprüche

1. Ungeformtes Produkt, welches vorgesehen ist für die Herstellung eines gesinterten Feuerfestproduktes, wobei das ungeformte Produkt eine Teilchenmischung aufweist, die zusammengesetzt ist durch:
- eine Grobfraktion, welche mehr als 50% und weniger als 91 % der Teilchenmischung aufweist und zwar in Massenprozenten, und aus Teilchen zusammengesetzt ist, die eine Größe von größer oder gleich 50 µm aufweist, genannt "Grobteilchen", und
- eine Matrixfraktion, die das Komplement zu 100% der Teilchenmischung bildet, und zusammengesetzt ist aus Teilchen, die eine Größe von kleiner als 50 µm aufweist, genannt "Matrixteilchen",
wobei das Produkt eine chemische Analyse in Massenprozent auf der Basis von Oxiden des Produkts aufweist, derart, dass:
- 45% < Al₂O₃,
- 7,5% < SiO₂ < 35% und 0 % ≤ ZrO₂ < 33%, vorausgesetzt, dass 10% < SiO₂ + ZrO₂ < 54%,
- 0,15% < B₂O₃ < 8%,
- andere Oxide: < 6%,
wobei Al₂O₃ das Komplement zu 100% darstellt, wobei die Grobfraktion mehr als 15% der Grobteilchen mit einer Größe größer als 1 mm in Massenprozent auf der Basis der Teilchenmischung aufweist, wobei die Matrixfraktion eine chemische Analyse in Massenprozent auf der Basis von Oxiden der Matrixfraktion aufweist, derart, dass :
- Al₂O₃ + SiO₂ + ZrO₂ > 86%, vorausgesetzt dass 35% < Al₂O₃.

2. Ungeformtes Produkt nach dem vorhergehenden Anspruch, in welchem 0,2% < B₂O₃ < 6,5% und/oder der Anteil an anderen Oxiden kleiner als 5% ist.

3. Ungeformtes Produkt nach dem vorhergehenden Anspruch, in welchem 0,75% < B₂O₃ < 4,5% und/oder der Gehalt an anderen Oxiden kleiner als 2% ist.

4. Ungeformtes Produkt nach dem vorhergehenden Anspruch, in welchem B₂O₃ < 2,6% ist.

5. Ungeformtes Produkt nach einem der vorhergehenden Ansprüche, in welchem Bor durch eine Borzusammensetzung eingebracht ist, welche aus Borkarbid, den Oxiden von Bor, Borsäure, Kollemanit, Natriumborat ausgewählt ist, wobei die Zusammensetzungen Siliziumoxid und Boroxid, SiB₆, Aluminiumborat, AlB₃ und ihre Mischungen aufweist.

6. Ungeformtes Produkt nach einem der vorhergehenden Ansprüche, in welchem die Matrixfraktion außer Teilchen, die Bor enthalten, für mehr als 80% der Masse aus Aluminiumoxidteilen und/oder aus Siliziumoxidteilen und/oder aus Mullitteilchen und/oder aus Mullit-Zirkonteilchen und/oder aus Teilchen eines Silikoaluminiummaterials zusammengesetzt ist, welches einen Gehalt an Aluminiumoxid größer als 50% aufweist.

7. Ungeformtes Produkt nach einem der vorhergehenden Ansprüche, in welchem mehr als 50% der Teilchen, die Bor enthalten, Matrixteilchen sind in Massenprozent auf der Basis von Oxiden.

8. Ungeformtes Produkt nach einem der vorhergehenden Ansprüche, in welchem Al₂O₃ + SiO₂ > 83% oder Al₂O₃ + SiO₂ + ZrO₂ > 92% oder 15% < SiO₂ + ZrO₂ < 50% oder SiO₂ > 10% sind

9. Ungeformtes Produkt nach einem der vorhergehenden Ansprüche, in welchem, wenn der Gehalt an Siliziumoxid in der Matrixfraktion größer als 10% in Massenprozent auf der Basis von Oxiden der Matrixfraktion sind, die Matrixfraktion ein Verhältnis von Aluminiumoxid/Siliziumoxid größer als 2 und kleiner als 10 aufweist.

10. Ungeformtes Produkt nach einem der vorhergehenden Ansprüche, in welchem die Grobfraktion für mehr als 80% seiner Masse aus Aluminiumoxidteilchen und/oder Mullitteilchen und/oder Mullit-Zirkonteilchen und/oder Teilchen aus einem Siliko-Aluminiummaterial besteht, welche einen Gehalt an Aluminiumoxid größer als 50% aufweist.

11. Ungeformtes Produkt nach einem der vorhergehenden Ansprüche, die eine chemische Analyse aufweist, derart, dass:
- Al₂O₃: Komplement zu 100%
- (21 % ≤ SiO₂ < 25% und ZrO₂ < 1 %) oder (14% < SiO₂ < 17% und 26% < ZrO₂ < 32%)
- 0,2% < B₂O₃ < 2,6%,
- andere Oxide: < 3%, und
- eine Matrixfraktion, die eine chemische Analyse aufweist, derart, dass Al₂O₃ + SiO₂ + ZrO₂ + B₂O₃ > 90%, und
- eine Menge an Matrixteilchen, die zwischen 20% und 35% der Masse der Teilchenmischung liegt, und
- mehr als 15% von Grobteilchen, die eine Größe größer als 1 mm aufweisen, wobei die Gehalte der chemischen Analyse in Massenprozenten auf der Basis von Oxiden ausgedrückt sind.

12. Gesintertes Feuerfestprodukt, welches eine Mikrostruktur aufweist, die aus in einer Matrix gebundenen Körnern besteht und eine chemische Analyse aufweist, derart, dass in Massenprozent auf der Basis von Oxiden und für eine Gesamtheit von 100% gilt:
- 45% < Al₂O₃,
- 7,5% < SiO₂ < 37% und 0 % ≤ ZrO₂ < 35%, vorausgesetzt, dass 10% < SiO₂ + ZrO₂ < 54,3%,
- 0,1% < B₂O₃ < 2,5%,
- andere Oxide: < 6,4%,
wobei Al₂O₃ das Komplement zu 100% bildet, wobei das Bor in der Masse des gesintertes Produkts verteilt ist, und mehr als 15% der Körner einen entsprechenden Durchmesser größer als 1 mm aufweist.

13. Gesintertes Produkt nach dem vorhergehenden Anspruch, in welchem 0,25% <B₂O₃<1% ist.

14. Gesintertes Produkt nach einem der beiden vorhergehenden Ansprüche, in welchem 0,20% < SiO₂ + ZrO₂ < 40% ist.

15. Gesintertes Produkt nach einem der drei vorhergehenden Ansprüche:
- mit einer chemischen Analyse derart, dass:
- Al₂O₃: Komplement zu 100%
- (21 % ≤ SiO₂ < 25% und ZrO₂ < 1 %), oder (14% < SiO₂ < 17% und 26% < ZrO₂ < 32%)
- 0,25% < B₂O₃ < 1 %,
- andere Oxide: < 3%, und
- mehr als 15% der Körner einen entsprechenden Durchmesser größer als 1 mm aufweisen, wobei die Gehalte der chemischen Analyse in Massenprozent auf der Basis von Oxiden ausgedrückt sind.

16. Glasschmelzofen mit einem gesinterten Produkt gemäß einem der vier vorhergehenden Ansprüche.

17. Glasschmelzofen nach dem vorhergehenden Anspruch, in welchem das gesinterte Produkt in einem Bereich angeordnet ist, der nicht geeignet ist, in Kontakt mit der Glasschmelze zu gelangen.

## Claims

1. An unshaped product intended for the manufacture of a sintered refractory product, said unshaped product comprising a particulate mixture consisting of:
- a coarse fraction, representing more than 50% and less than 91% of the particulate mixture, as weight percentage, and consisting of the particles having a size greater than or equal to 50 µm, referred to as "coarse particles", and
- a matrix fraction, forming the remainder up to 100% of the particulate mixture, and consisting of the particles having a size less than 50 µm, referred to as "matrix particles",
the product having a chemical analysis, as weight percentage on the basis of the oxides of the product, such that:
- 45% < Al₂O₃,
- 7.5% < SiO₂ < 35% and 0% ≤ ZrO₂ < 33%, provided that 10% < SiO₂ + ZrO₂ < 54%,
- 0.15% < B₂O₃ < 8%,
- other oxides: < 6%,
Al₂O₃ constituting the remainder up to 100%,
said coarse fraction comprising more than 15% of coarse particles having a size greater than 1 mm, as weight percentage on the basis of the particulate mixture,
said matrix fraction having a chemical analysis, as weight percentage on the basis of the oxides of the matrix fraction, such that:
- Al₂O₃ + SiO₂ + ZrO₂ > 86%, provided that 35% < Al₂O₃.

2. The unshaped product as claimed in the preceding claim, wherein 0.2% < B₂O₃ < 6.5% and/or the content of other oxides is less than 5%.

3. The unshaped product as claimed in the immediately preceding claim, wherein 0.75% < B₂O₃ < 4.5% and/or the content of other oxides is less than 2%.

4. The unshaped product as claimed in the immediately preceding claim, wherein B₂O₃ < 2.6%.

5. The unshaped product as claimed in any one of the preceding claims, wherein the boron is provided by a boron compound chosen from boron carbide, boron oxides, boric acid, colemanite, sodium borate, compounds comprising silica and boron oxide, SiB₆, alumina borates, AlB₃ and mixtures thereof.

6. The unshaped product as claimed in any one of the preceding claims, wherein the matrix fraction, other than particles comprising boron, consists, for more than 80% of its weight, of alumina particles and/or silica particles and/or mullite particles and/or mullite-zirconia particles and/or particles of a silicoaluminous material having an alumina content greater than 50%.

7. The unshaped product as claimed in any one of the preceding claims, wherein more than 50% of the particles comprising boron are matrix particles, as weight percentage on the basis of the oxides.

8. The unshaped product as claimed in any one of the preceding claims, wherein
Al₂O₃ + SiO₂ > 83% or Al₂O₃ + SiO₂ + ZrO₂ > 92% or 15% < SiO₂ + ZrO₂ < 50% or SiO₂ > 10%.

9. The unshaped product as claimed in any one of the preceding claims, wherein, if the silica content in the matrix fraction is greater than 10%, as weight percentage on the basis of the oxide phases of the matrix fraction, said matrix fraction has an alumina/silica ratio greater than 2 and less than 10.

10. The unshaped product as claimed in any one of the preceding claims, wherein the coarse fraction consists, for more than 80% of its weight, of alumina particles and/or mullite particles and/or mullite-zirconia particles and/or particles of a silicoaluminous material having an alumina content greater than 50%.

11. The unshaped product as claimed in any one of the preceding claims, having
- a chemical analysis such that:
- Al₂O₃: remainder up to 100%,
- (21% ≤ SiO₂ ≤ 25% and ZrO₂ < 1%) or (14% < SiO₂ < 17% and 26% < ZrO₂ < 32%),
- 0.2% < B₂O₃ < 2.6%,
- other oxides: < 3%, and
- a matrix fraction having a chemical analysis such that Al₂O₃ + SiO₂ + ZrO₂ + B₂O₃ > 90%, and
- an amount of matrix particles between 20% and 35% of the weight of the particulate mixture, and
- more than 15% of coarse particles having a size greater than 1 mm,
the contents of the chemical analysis being expressed as weight percentages on the basis of the oxides.

12. A sintered refractory product having a microstructure consisting of grains bonded by a matrix, and having a chemical analysis such that, as weight percentages on the basis of the oxides and for a total of 100%:
- 45% < Al₂O₃,
- 7.5% < SiO₂ < 37% and 0% ≤ ZrO₂ < 35%, provided that 10% < SiO₂ + ZrO₂ < 54.3%,
- 0.1% < B₂O₃ < 2.5%,
- other oxides: < 6.4%,
Al₂O₃ constituting the remainder up to 100%,
the boron being distributed in the body of said sintered product, and
more than 15% of grains having an equivalent diameter greater than 1 mm.

13. The sintered product as claimed in the preceding claim, wherein 0.25% < B₂O₃ < 1%.

14. The sintered product as claimed in any one of the two immediately preceding claims, wherein 20% < SiO₂ + ZrO₂ < 40%.

15. The sintered product as claimed in any one of the three immediately preceding claims, having:
- a chemical analysis such that:
- Al₂O₃: remainder up to 100%,
- (21% ≤ SiO₂ ≤ 25% and ZrO₂ < 1%) or (14% < SiO₂ < 17% and 26% < ZrO₂ < 32%),
- 0.25% < B₂O₃ < 1%,
- other oxides: < 3%, and
- more than 15% of grains having an equivalent diameter greater than 1 mm,
the contents of the chemical analysis being expressed as weight percentages on the basis of the oxides.

16. A glass furnace comprising a sintered product as claimed in any one of the four immediately preceding claims.

17. The glass furnace as claimed in the immediately preceding claim, wherein said sintered product is in a region which is not capable of coming into contact with molten glass.
